# EUROPEAN PATENT SPECIFICATION

(11) **EP 3 084 142 B1**
(45) Date of publication and mention of the grant of the patent: **02.01.2019**
(21) Application number: 14872285.3
(22) Date of filing: 07.11.2014
(51) Int. Cl.: F01D 17/16, F04D 29/40

(54) **SHORTENED SUPPORT FOR COMPRESSOR VARIABLE VANE**
VERKÜRZTER TRÄGER FÜR VERSTELLBARE LEITSCHAUFEL EINES VERDICHTERS
SUPPORT RACCOURCI POUR AUBE VARIABLE DE COMPRESSEUR

(30) Priority: 16.12.2013 US 201361916358 P
(43) Date of publication of application: 26.10.2016
(73) Proprietor: United Technologies Corporation, Farmington, CT 06032 (US)
(72) Inventor: LABOUDY, Crystal, Portland, Connecticut 06480 (US); TRAVIS, Brittany, Middletown, Connecticut 06457 (US); WOOD, Mark R., Middletown, Connecticut 06457 (US)
(74) Representative: Dehns
(86) International application number: PCT/US2014/064486
(87) International publication number: WO 2015/094509

(56) References cited:
- US-A- 4 995 786
- US-A1- 2002 154 991
- US-A1- 2008 031 730
- US-A1- 2012 275 912
- US-B2- 6 984 104
- US-B2- 8 517 661

## Description

### BACKGROUND OF THE INVENTION

This application relates to a support for a vane stem of a compressor variable vane.

Gas turbine engines are known and, typically, include a fan delivering air into a compressor section. The air is compressed and delivered into a combustor section where it is mixed with fuel and ignited. Products of this combustion pass downstream over turbine rotors driving them to rotate.

In a standard compressor section, there are rotating rotors carrying stages of blades. Between the stages of rotating blades there are often static vanes. One type of vane has an angle of incidence that may be varied to direct the air flow to a downstream blade in a desired condition. An actuator for the variable vane can change the angle depending on flight conditions. It is known to have the actuator driving an airfoil on the vane through a vane stem. The vane stem is supported in a housing boss with a bushing.

In the prior art, the support for the vane stem is complicated by the possibility that a pressure drop, from outside of the compressor section compared to inside the compressor section, could cause the vane to be drawn inwardly and away from its support.

US 4 995 786 A discloses a variable vane assembly as set forth in the preamble of claim 1.

### SUMMARY OF THE INVENTION

From a first aspect, the invention provides a variable vane assembly as recited in claim 1.

In an embodiment according to the above, the clearance ratio is greater than 35.

In another embodiment according to any of the above, a top hat bushing is inserted in the upstream housing boss. The top hat bushing defines the radially outer end of the upstream housing boss.

In another embodiment according to any of the above, a downstream bushing supports the downstream vane stem in the downstream housing boss. The downstream bushing has an outer diameter and extends for a length. An upstream bushing ratio of the length to the outer diameter is greater than or equal to 2.5 and less than or equal to 3.0.

In another embodiment according to any of the above, the downstream vane stem has an outer periphery supported within the downstream bushing that has at least one greater diameter portion and a lesser diameter portion.

In another embodiment according to any of the above, there are a pair of greater diameter portions on opposed sides of the lesser diameter portion.

In another embodiment according to any of the above, the downstream bushing includes graphite.

In another embodiment according to any of the above, the upstream vane stage has an upstream bushing positioned within a bore of the upstream housing boss. The upstream bushing extends for a length and has an outer diameter. An upstream bushing ratio of the length to the outer diameter is greater than 3.0.

In another embodiment according to any of the above, the upstream vane stage has an upstream bushing positioned within a bore of the upstream housing boss. The upstream bushing extends for a length and having an outer diameter and an upstream bushing ratio of the length to the outer diameter being greater than 3.0.

In another embodiment according to any of the above, the downstream bushing includes graphite.

The invention also provides a compressor section that comprises a plurality of rotor blade stages and a variable vane assembly according to any of the above.

These and other features may be best understood from the following drawings and specification.

### BRIEF DESCRIPTION OF THE DRAWINGS

Figure 1 schematically illustrates a gas turbine engine, according to an embodiment.
Figure 2 shows a portion of a compressor section, according to an embodiment.
Figure 3A shows an upstream variable vane stage.
Figure 3B shows a downstream variable vane stage.

### DETAILED DESCRIPTION

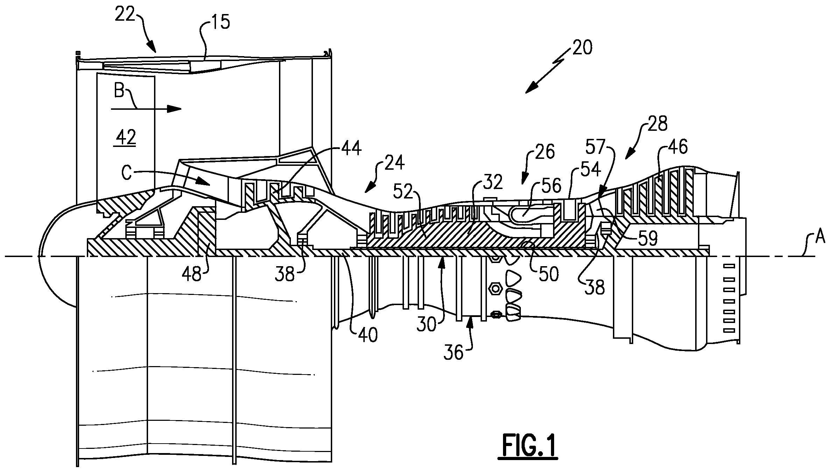

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (wherein °R = K x ⁹/₅). The "Low corrected fan tip speed" as disclosed herein according to one non-limiting embodiment is less than about 1150 ft / second (350.5 m/s).

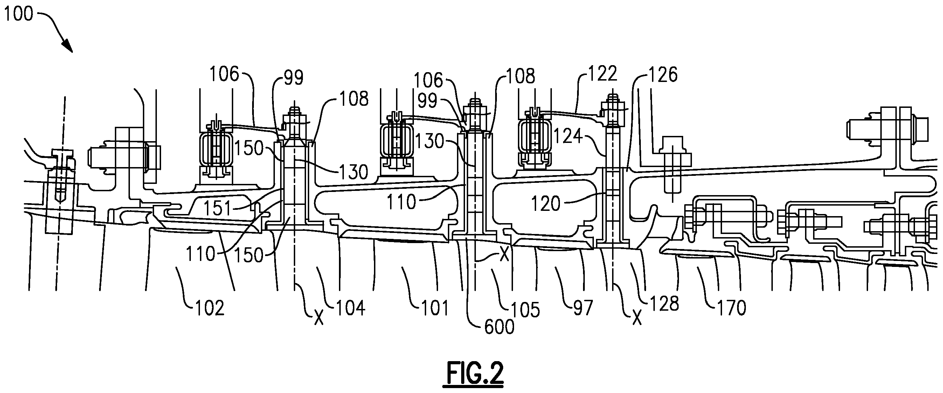

A compressor section 100 is illustrated in Figure 2 according to an embodiment. The compressor section 100 may be part of a high pressure compressor section, such as section 52 in Figure 1.

A plurality of rotor blades 97, 101 and 102 are shown and are driven to rotate as the engine operates. Intermediate to the blades are variable vanes, such as variable vanes 104, 105 and 128. Variable vanes 104 and 105 could be said to be the first and second stage variable vanes, respectively. While the variable vane stages 104 and 105 include structural differences, their components will be identified by common reference numbers for purposes of this application. In general, the differences between the two stages 104 and 105 are relatively small compared to the differences with a downstream stage 128.

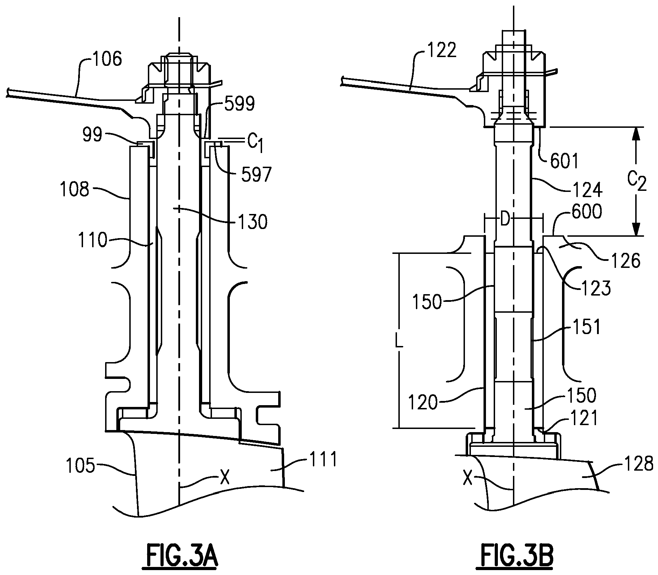

A vane stem 130 secures an airfoil of the vanes 104 and 105 and extends outwardly of a boss 108. A vane arm 106 is secured to the vane stem 130 outwardly of the boss 108. Bushings 110 are positioned within the boss 108. The bushings 110 must extend for a relatively great length and, typically, must extend to support radially thicker portions 150 of the vane stem which are spaced on opposed sides of a thinner portion 151 of the vane stem 130. The thicker and thinner portions are best understood from Figures 3A and 3B.

The vane arm 106 is secured to the vane stem 130, which is supported in the boss 108 by bushing 110, adjacent an outer end of the boss 108. This is because a pressure drop across the variable vanes 104 and 105 could cause the vane to be drawn inwardly. The vane arm 106 is designed to contact a top hat bushing 99, which protects the boss 108 and the vane arm 106 from wear, when the vane drops due to pressure differences.

The third stage variable vane 128, which conditions air flow to approach a compressor blade stage 170, does not have as challenging of a pressure drop. Thus, as shown, the boss 126 supporting the vane stem 124 need not extend as far outwardly as the more upstream stages. A bushing 120 supports the vane stem 124. A vane arm 122 is secured to the outer end of the vane stem 124. The pressure does not cause the vane to drop at this stage so the vane arm 122 will not contact the boss 126. Since no wear is expected, no top hat bushing is required. In addition, the outer diameter height of the boss 126 may be reduced.

The vane stem 124 must still extend radially outwardly beyond the radially outer end of the boss 126, as the vane arm 122 needs to avoid the compressor housing split flange (not illustrated).

The bushing 120, or the combination of the bushings 110 and 99, form a trunnion for the variable vane stems, 124 and 130, respectively.

Figure 3A shows the variable vane stage 105. Variable vane stage 104 will be similar. As shown, vane stem 130 is attached to a vane arm 106 on an opposed end of the vane stem 130 relative to the airfoil 111. The top hat bushing 99 is placed within a bore, or hole, in the boss 108. A clearance C₁ between a radially inner end 599 of the vane arm 106, and a radially outer end 597 of the top hat bushing 99 is defined. For purposes of discussing the clearance, the top hat bushing 99 is taken as being part of boss 108. As can be appreciated, the clearance C₁ is relatively small when compared to the clearance C₂ shown in Figure 3B for the third stage variable vane 128.

As shown in Figure 3B, the vane arm 122 is secured to the vane stem 124. A radially inner end 601 of the vane arm 122 is spaced by a distance C₂ from a radially outer end 600 of boss 126. The "radial" dimension as utilized with regard to the C₁ and C₂ quantities is measured from the engine center axis A as shown in Figure 1.

In embodiments, C₁ may be on the order of .016 inch (.040 centimeters) or .018 inch (.045 centimeters), depending on which of the two stages 104 and 105 is measured. On the other hand, C₂ may be .751 inch (1.90 centimeters). In embodiments, a ratio of C₂ to C₁ may be greater than or equal to 10. More narrowly, the ratio of C₂ to C₁ may be greater than or equal to 20. Even more narrowly, the ratio of C₂ to C₁ may be greater than or equal to 35.

As can be appreciated, the vane stems each have an end extending from the airfoils, and another end which is secured by the vane arm. The bosses, such as bosses 108, form part of a housing, and include a bore that receives the bushings 110, or 120.

As shown in Figure 3B, a bushing 120 on the variable vane 128 supports the enlarged or radially thicker portions 150. Further, as illustrated, there is a reduced diameter portion 151 intermediate the enlarged portions 150. The larger diameters of the vane stem are designed to take the cross-cornering vane loads against the bushing 120.

The radial thickness of the thicker portions 150, and a radially thinner portion 151 measured relative to the rotational axis X of the variable vane stems.

The bushing 120 extends for a length L between an inner end 121 and an outer end 123, and has an outer diameter D. In one embodiment, L was about 1.12 inches (2.85 centimeters) while D was about .398 inches (1.01 centimeters). A ratio of L to D was thus about 2.81 inches (7.14 centimeters). In various embodiments, the ratio is greater than or equal to about 2.5 and less than or equal to about 3.0.

The bushing 120 may be a graphite bearing available under the trade name POCO. The POCO bearings may be available from Poco Graphite, Inc. under their trade name Jet-2. These may be simple cylinders press fit into a reamed hole in the boss.

Of course, other bearing types such as a metal lined bushing, would also benefit from the teachings of this application.

In at least one existing variable vane system, the ratio of L to D was on the order of 4.68. Such longer bushings were also used at variable vane stages which did not have the concern with pressure drop, and added unnecessary weight. Further, the assembly of the relatively long bushing into a bore in the housing is challenging and can result in breakage, particularly when using graphite containing bushings. Thus, the reduction of the length provides assembly benefits.

As can be appreciated, the shorter bushing 120 is utilized in at least one embodiment with a downstream variable vane stage 128, while the longer bushings 110 are utilized with more upstream rotor stages. As mentioned, those longer bushings have a ratio of a length to an outer diameter which is outside the range of 2.5 to 3.0.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A variable vane assembly comprising:
an upstream vane stage (105) including an airfoil (111) coupled with an upstream vane stem (130) and an upstream vane arm (106) and configured to drive said upstream vane stem (130) to rotate, with said upstream vane stem (130) supported in an upstream housing boss (108), and a downstream vane stage (128) including an airfoil coupled with a downstream vane stem (124) and a downstream vane arm (122) and configured to drive said downstream vane stem (124) to rotate, with said downstream vane stem (124) supported in a downstream housing boss (126); **characterised by**
a first clearance (C1) defined between a radially inner end (599) of said upstream vane arm (106) and a radially outer end (597) of said upstream housing boss (108), and a second clearance (C2) defined between a radially inner end (601) of said downstream vane arm (122) and a radially outer end (600) of said downstream housing boss (126), with a clearance ratio of said second clearance (C2) to said first clearance (C1) being greater than or equal to 10.

2. The variable vane assembly as set forth in claim 1, wherein said clearance ratio is greater than 35.

3. The variable vane assembly as set forth in claim 1 or 2, wherein a top hat bushing (99) is inserted in said upstream housing boss (108), and said top hat bushing (99) defining said radially outer end (597) of said upstream housing boss (108).

4. The variable vane assembly as set forth in any preceding claim, wherein a downstream bushing (120) supports said downstream vane stem (124) in said downstream housing boss (126), with said downstream bushing (120) having an outer diameter (D) and extending for a length (L), and a downstream bushing ratio of said length (L) to said outer diameter (D) being greater than or equal to 2.5 and less than or equal to 3.0.

5. The variable vane assembly as set forth in claim 4, wherein said downstream vane stem (124) has an outer periphery supported within said downstream bushing (120) that has at least one greater diameter portion (150) and a lesser diameter portion (151).

6. The variable vane assembly as set forth in claim 5, wherein there are a pair of greater diameter portions (150) on opposed sides of said lesser diameter portion (151).

7. The variable vane assembly as set forth in claim 4, 5 or 6, wherein said downstream bushing (120) includes graphite.

8. The variable vane assembly as set forth in any preceding claim, wherein said upstream vane stage (105) has an upstream bushing (110) positioned within a bore of said upstream housing boss (108), said upstream bushing (110) extending for a length and having an outer diameter and an upstream bushing ratio of said length to said outer diameter being greater than 3.0.

9. A compressor section (100) comprising:
a plurality of rotor blade stages; and
a variable vane assembly as set forth in any preceding claim.

## Patentansprüche

1. Verstellbare Leitschaufelbaugruppe, Folgendes umfassend:
eine stromaufwärtige Leitschaufelstufe (105), die ein Leitschaufelblatt (111) beinhaltet, das an einen stromaufwärtigen Leitschaufelschacht (130) und einen stromaufwärtigen Leitschaufelschenkel (106) gekoppelt ist und dazu konfiguriert ist, den stromaufwärtigen Leitschaufelschacht (130) anzutreiben, sich zu drehen, wobei der stromaufwärtige Leitschaufelschacht (130) in einer stromaufwärtigen Gehäusenabe (108) getragen wird, und eine stromabwärtige Leitschaufelstufe (128), die ein Leitschaufelblatt beinhaltet, das an einen stromabwärtigen Leitschaufelschacht (124) und einen stromabwärtigen Leitschaufelschenkel (122) gekoppelt ist und dazu konfiguriert ist, den stromabwärtigen Leitschaufelschacht (124) anzutreiben, sich zu drehen, wobei der stromabwärtige Leitschaufelschacht (124) in einer stromabwärtigen Gehäusenabe (126) getragen wird; **gekennzeichnet durch**
einen ersten Abstand (C1), der zwischen einem radial inneren Ende (599) des stromaufwärtigen Leitschaufelschenkels (106) und einem radial äußeren Ende (597) der stromaufwärtigen Gehäusenabe (108) definiert ist, und einen zweiten Abstand (C2), der zwischen einem radial inneren Ende (601) des stromabwärtigen Leitschaufelschenkels (122) und einem radial äußeren Ende (600) der stromabwärtigen Gehäusenabe (126) definiert ist, wobei ein Abstandsverhältnis des zweiten Abstands (C2) zu dem ersten Abstand (C1) größer als oder gleich 10 ist.

2. Verstellbare Leitschaufelbaugruppe nach Anspruch 1, wobei das Abstandsverhältnis größer als 35 ist.

3. Verstellbare Leitschaufelbaugruppe nach Anspruch 1 oder 2, wobei eine T-Hülse (99) in die stromaufwärtige Gehäusenabe (108) eingeführt wird, und die T-Hülse (99) das radial äußere Ende (597) der stromaufwärtigen Gehäusenabe (108) definiert.

4. Verstellbare Leitschaufelbaugruppe nach einem der vorhergehenden Ansprüche, wobei eine stromabwärtige Hülse (120) den stromabwärtigen Leitschaufelschacht (124) in der stromabwärtigen Gehäusenabe (126) trägt, wobei die stromabwärtige Hülse (120) einen Außendurchmesser (D) aufweist und sich über eine Länge (L) erstreckt, und ein stromabwärtiges Verhältnis in der Hülse der Länge (L) zu dem Außendurchmesser (D) größer als oder gleich 2,5 und kleiner als oder gleich 3,0 ist.

5. Verstellbare Leitschaufelbaugruppe nach Anspruch 4, wobei der stromabwärtige Leitschaufelschacht (124) einen Außenumfang aufweist, der innerhalb der stromabwärtigen Hülse (120) getragen wird, die mindestens einen größeren Durchmesserabschnitt (150) und einen kleineren Durchmesserabschnitt (151) aufweist.

6. Verstellbare Leitschaufelbaugruppe nach Anspruch 5, wobei ein Paar größerer Durchmesserabschnitte (150) auf gegenüberliegenden Seiten des kleineren Durchmesserabschnitts (151) vorliegt.

7. Verstellbare Leitschaufelbaugruppe nach Anspruch 4, 5 oder 6, wobei die stromabwärtige Hülse (120) Graphit beinhaltet.

8. Verstellbare Leitschaufelbaugruppe nach einem der vorhergehenden Ansprüche, wobei die stromaufwärtige Leitschaufelstufe (105) eine stromaufwärtige Hülse (110) aufweist, die innerhalb eines Bohrlochs der stromaufwärtigen Gehäusenabe (108) angeordnet ist, wobei die stromaufwärtige Hülse (110) sich über eine Länge erstreckt und einen Außendurchmesser und ein stromaufwärtiges Verhältnis in der Hülse der Länge zu dem Außendurchmesser aufweist, das größer als 3,0 ist.

9. Verdichterabschnitt (100), Folgendes umfassend:
eine Vielzahl von Rotorlaufschaufelstufen; und
eine verstellbare Leitschaufelbaugruppe nach einem der vorhergehenden Ansprüche.

## Revendications

1. Ensemble aube variable comprenant :
un étage d'aube amont (105) comportant un profil aérodynamique (111) couplé à une tige d'aube amont (130) et un bras d'aube amont (106) et configuré pour entraîner ladite tige d'aube amont (130) en rotation, avec ladite tige d'aube amont (130) supportée dans un bossage de boîtier amont (108), et un étage d'aube aval (128) comportant un profil aérodynamique couplé à une tige d'aube aval (124) et un bras d'aube aval (122) et configuré pour entraîner ladite tige d'aube aval (124) en rotation, avec ladite tige d'aube aval (124) supportée dans un bossage de boîtier aval (126) ; **caractérisé par**
un premier jeu (C1) défini entre une extrémité radialement intérieure (599) dudit bras d'aube amont (106) et une extrémité radialement extérieure (597) dudit bossage de boîtier amont (108), et un deuxième jeu (C2) défini entre une extrémité radialement intérieure (601) dudit bras d'aube aval (122) et une extrémité radialement extérieure (600) dudit bossage de boîtier aval (126), avec un rapport de jeu entre ledit deuxième jeu (C2) et ledit premier jeu (C1) supérieur ou égal à 10.

2. Ensemble aube variable selon la revendication 1, dans lequel ledit rapport de jeu est supérieur à 35.

3. Ensemble aube variable selon la revendication 1 ou 2, dans lequel une douille chapeau (99) est insérée dans ledit bossage de boîtier amont (108), et ladite douille chapeau (99) définissant ladite extrémité radialement extérieure (597) dudit bossage de boîtier amont (108).

4. Ensemble aube variable selon une quelconque revendication précédente, dans lequel une douille aval (120) supporte ladite tige d'aube aval (124) dans ledit bossage de boîtier aval (126), avec ladite douille aval (120) ayant un diamètre extérieur (D) et s'étendant sur une longueur (L), et un rapport de douille aval entre ladite longueur (L) et ledit diamètre extérieur (D) étant supérieur ou égal à 2,5 et inférieur ou égal à 3,0.

5. Ensemble aube variable selon la revendication 4, dans lequel ladite tige d'aube aval (124) a une périphérie extérieure supportée à l'intérieur de ladite douille aval (120) qui a au moins une portion de diamètre supérieur (150) et une portion de diamètre inférieur (151).

6. Ensemble aube variable selon la revendication 5, dans lequel il y a une paire de portions de diamètre supérieur (150) sur des côtés opposés de ladite portion de diamètre inférieur (151).

7. Ensemble aube variable selon la revendication 4, 5 ou 6, dans lequel ladite douille aval (120) comprend du graphite.

8. Ensemble aube variable selon une quelconque revendication précédente, dans lequel ledit étage d'aube amont (105) a une douille amont (110) positionnée à l'intérieur d'un alésage dudit bossage de boîtier amont (108), ladite douille amont (110) s'étendant sur une longueur et ayant un diamètre extérieur et un rapport de douille amont entre ladite longueur et ledit diamètre extérieur étant supérieur à 3,0.

9. Section compresseur (100) comprenant :
une pluralité d'étages de pale de rotor ; et
un ensemble aube variable selon une quelconque revendication précédente.
